# EUROPEAN PATENT APPLICATION

(11) **EP 4 738 113 A1**
(43) Date of publication of application: **06.05.2026**
(21) Application number: 24844194.1
(22) Date of filing: 04.02.2024
(51) Int. Cl.: G06F 9/48

(54) **INTERRUPT HANDLING METHOD, APPARATUS AND DEVICE**

(30) Priority: 27.07.2023 CN 202310942590
(71) Applicant: Huawei Technologies Co., Ltd., Shenzhen, Guangdong 518129 (CN)
(72) Inventor: WU, Rongjun, Shenzhen, Guangdong 518129 (CN); ZHOU, Wei, Shenzhen, Guangdong 518129 (CN)
(74) Representative: Isarpatent
(86) International application number: PCT/CN2024/075799
(87) International publication number: WO 2025/020495

(57) **Abstract**

This application relates to the field of computer technologies, and provides an interrupt processing method, apparatus, and device, to resolve system suspension or firmware suspension caused by a large quantity of interrupts triggered by non-fatal errors. The method includes: Firmware receives a plurality of interrupts in a first duration, where the plurality of interrupts are triggered when non-fatal errors occur in a hardware layer. The firmware masks, based on interrupt information and layered masking information of the plurality of interrupts, an interrupt that is of a target to-be-masked object corresponding to the plurality of interrupts and that is after the first duration, where the layered masking information indicates a plurality of to-be-masked objects, a plurality of to-be-masked objects are obtained by layering transmission of the interrupts, and the plurality of to-be-masked objects include the target to-be-masked object. The firmware sends the interrupt information of the plurality of interrupts to a kernel driver.

## Description

This application claims priority to Chinese Patent Application No. 202310942590.9, filed with the China National Intellectual Property Administration on July 27, 2023 and entitled "INTERRUPT PROCESSING METHOD, APPARATUS, AND DEVICE", which is incorporated herein by reference in its entirety.

### TECHNICAL FIELD

This application relates to the field of computer technologies, and in particular, to an interrupt processing method, apparatus, and device.

### BACKGROUND

In a system on a chip (system on a chip, SoC), a large quantity of non-fatal errors (non-fatal errors, NFEs) occur suddenly. For example, the non-fatal errors may include correctable errors (correctable errors, CEs) and non-fatal uncorrectable errors. For example, when faults occur in a large quantity of areas (for example, exceptions simultaneously occur in a plurality of pages (pages)) in a memory of the SoC, and/or an access frequency of the fault areas is high, a large quantity of non-fatal errors occur suddenly in the memory. These non-fatal errors trigger a large quantity of interrupts, affecting normal service access and even causing system suspension or suspension of firmware (firmware) in a system.

### SUMMARY

This application provides an interrupt processing method, apparatus, and device, to resolve system suspension or firmware suspension caused by a large quantity of interrupts triggered by non-fatal errors.

To achieve the foregoing objectives, the following technical solutions are used in embodiments of this application.

According to a first aspect, an interrupt processing method is provided, and is applied to firmware, where the firmware is configured to run on a hardware layer, and the hardware layer may include hardware modules such as a processor, an accelerator, a storage, an I/O unit, a sensor, and a bus. The method includes: The firmware receives a plurality of interrupts in a first duration, where the plurality of interrupts are triggered when non-fatal errors occur in the hardware layer, and the non-fatal errors may include correctable errors and non-fatal uncorrectable errors. The firmware masks, based on interrupt information and layered masking information of the plurality of interrupts, an interrupt that is of a target to-be-masked object corresponding to the plurality of interrupts and that is after the first duration, where the layered masking information indicates a plurality of to-be-masked objects, a plurality of to-be-masked objects are obtained by layering transmission of the interrupts, and the plurality of to-be-masked objects include the target to-be-masked object. The firmware sends the interrupt information of the plurality of interrupts to a kernel driver.

In the foregoing technical solution, when receiving, in a first duration, the plurality of interrupts that are triggered by the non-fatal errors, the firmware may send the interrupt information of the plurality of interrupts to the kernel driver. In addition, the firmware may further mask, based on the interrupt information and the layered masking information of the plurality of interrupts, the interrupt that is of the target to-be-masked object corresponding to the plurality of interrupts and that is after the first duration. The layered masking information indicates the plurality of to-be-masked objects, and the plurality of to-be-masked objects are obtained by layering the transmission of the interrupts. Therefore, according to a strategy of layered masking, a case in which a large quantity of non-fatal errors trigger a large quantity of interrupts is avoided, thereby resolving system suspension or firmware suspension.

In a possible implementation of the first aspect, the plurality of to-be-masked objects include at least one of the following: a hardware module in the hardware layer, an interrupt line for transmission of an interrupt, and an interrupt bit of a status register for storing an interrupt. In a possible example, a plurality of layers obtained through layering may include a hardware module layer, an interrupt line layer, and an interrupt bit layer. A to-be-masked object in the hardware module layer may include a plurality of different hardware modules. For example, the to-be-masked object in the hardware module layer includes a CPU, an accelerator, and a storage. A to-be-masked object in the interrupt line layer may include a plurality of different interrupt lines. For example, the to-be-masked object in the interrupt line layer includes a plurality of interrupt lines identified by different interrupt numbers. A to-be-masked object in the interrupt bit layer may include different interrupt bit layers. For example, the to-be-masked object in the interrupt bit layer includes different interrupt bits.

In a possible implementation of the first aspect, that the firmware masks, based on the interrupt information and the layered masking information of the plurality of interrupts, the interrupt that is of the target to-be-masked object corresponding to the plurality of interrupts and that is after the first duration includes: When the plurality of interrupts belong to the target to-be-masked object, and a quantity of the plurality of interrupts reaches a preset threshold corresponding to the target to-be-masked object, the firmware masks the interrupt that is of the target to-be-masked object and that is after the first duration, where interrupt information of each interrupt indicates a to-be-masked object corresponding to the interrupt. For example, when receiving an interrupt, the firmware may determine, based on a hardware module identifier, an interrupt number, and an error type in interrupt information of the interrupt, a hardware module, an interrupt line, and an interrupt bit corresponding to the interrupt. Then, the firmware may count, based on different layers obtained through layering, a quantity of interrupts corresponding to each hardware module that triggers the interrupt, a quantity of interrupts corresponding to each interrupt line, and a quantity of interrupts corresponding to each interrupt bit. When a quantity of interrupts corresponding to a hardware module reaches a preset threshold, the hardware module is a target to-be-masked object, and the firmware masks an interrupt that is of the hardware module and that is after a first duration. When a quantity of interrupts corresponding to an interrupt line reaches a preset threshold, the interrupt line is a target to-be-masked object, and the firmware masks an interrupt that is of the interrupt line and that is after a first duration. When a quantity of interrupts corresponding to an interrupt bit layer reaches a preset threshold, the interrupt bit layer is a target to-be-masked object, and the firmware masks an interrupt that is of the interrupt bit layer and that is after a first duration.

In a possible implementation of the first aspect, the interrupt information of each interrupt includes at least one of the following: a hardware module identifier, an interrupt line identifier, and an error type of the non-fatal error and corresponding to the interrupt bit. The hardware module identifier indicates a hardware module in which the non-fatal error corresponding to the interrupt occurs. The interrupt line identifier indicates an interrupt line for transmission of the interrupt. For example, the interrupt line identifier may be an interrupt number. The error type of the non-fatal error and corresponding to the interrupt bit may also be referred to as an error type corresponding to the interrupt or a fault type corresponding to the interrupt, and may be used to determine an interrupt bit of a status register storing the interrupt. For example, the error type may include a single-bit error and a multi-bit error.

In a possible implementation of the first aspect, the method further includes: When the interrupt information includes the hardware module identifier, the firmware determines, based on the hardware module identifier in the interrupt information of each interrupt, a hardware module to which each interrupt belongs; when the interrupt information includes the interrupt line identifier, the firmware determines, based on the interrupt line identifier in the interrupt information of each interrupt, an interrupt line to which each interrupt belongs; and/or when the interrupt information includes the error type of the non-fatal error and corresponding to the interrupt bit, the firmware determines, based on the error type in the interrupt information of each interrupt, an interrupt bit to which each interrupt belongs.

In a possible implementation of the first aspect, the hardware layer includes a first hardware system, the firmware includes first firmware running on the first hardware system, the non-fatal errors include an RSA specification error and/or a safety error, and the first firmware is configured to mask a to-be-masked object corresponding to the RSA specification error and/or a to-be-masked object corresponding to the safety error. In the foregoing possible implementation, the first firmware masks an interrupt triggered by the RSA specification error and/or an interrupt triggered by the safety error, so that system suspension or firmware suspension caused by a large quantity of triggered interrupts can be avoided.

In a possible implementation of the first aspect, the hardware layer further includes a second hardware system, the firmware further includes second firmware running on the second hardware system, the non-fatal errors include a non-RSA specification error, and the second firmware is configured to mask a to-be-masked object corresponding to the non-RSA specification error. In the foregoing possible implementation, the second firmware masks an interrupt triggered by the non-RSA specification error, so that system suspension or firmware suspension caused by a large quantity of triggered interrupts can be avoided.

In a possible implementation of the first aspect, for the non-RSA specification error, the method further includes: The second firmware unmasks the masked object in the plurality of to-be-masked objects after a delay of second duration. In the foregoing possible implementation, the second firmware unmasks the masked object in the plurality of to-be-masked objects after the delay of second duration, so that system suspension or firmware suspension caused by interrupts triggered by a large quantity of non-RSA specification errors can be avoided, and processing on an interrupt triggered by a subsequent non-fatal error is not affected, thereby ensuring user experience.

In a possible implementation of the first aspect, the unmasking is performed after processing of a last interrupt in the plurality of interrupts is completed; or the unmasking is performed in sequence. In the foregoing possible implementations, when impact of the interrupt after the first duration is large, unmasking may be performed as early as possible after the processing of the last interrupt in the plurality of interrupts is completed, to reduce impact caused by interrupt masking. When impact of the interrupt after the first duration is small, unmasking is performed in sequence, to avoid that an interrupt that is of a to-be-masked object and that is after the first duration is masked for a long time period, thereby ensuring performance of different to-be-masked objects.

In a possible implementation of the first aspect, the first firmware communicates with the kernel driver through an advanced platform error interface APEI, and the second firmware communicates with the kernel driver through an inter-core error message IPEM interface.

According to a second aspect, an interrupt processing method is provided, and is applied to a kernel driver, where the kernel driver is configured to run on a hardware layer, and the hardware layer may include hardware modules such as a processor, an accelerator, a storage, an I/O unit, a sensor, and a bus. The method includes: The kernel driver receives interrupt information of a plurality of interrupts sent by firmware, where the plurality of interrupts are received by the firmware in a first duration, and the plurality of interrupts are triggered when non-fatal errors occur in the hardware layer. The kernel driver processes the plurality of interrupts based on the interrupt information of the plurality of interrupts, where an interrupt that is of a target to-be-masked object corresponding to the plurality of interrupts and that is after the first duration is masked by the firmware, the firmware performs masking based on the interrupt information and layered masking information of the plurality of interrupts, a plurality of to-be-masked objects are obtained by layering transmission of the interrupts, and the plurality of to-be-masked objects include the target to-be-masked object.

In the foregoing technical solution, when receiving, in a first duration, the plurality of interrupts that are triggered by the non-fatal errors, the firmware may send the interrupt information of the plurality of interrupts to the kernel driver, so that the kernel driver processes the plurality of interrupts. In addition, the firmware may further mask, based on the interrupt information and the layered masking information of the plurality of interrupts, the interrupt that is of the target to-be-masked object corresponding to the plurality of interrupts and that is after the first duration. The layered masking information indicates the plurality of to-be-masked objects, and the plurality of to-be-masked objects are obtained by layering the transmission of the interrupts. Therefore, according to a strategy of layered masking, a case in which a large quantity of non-fatal errors trigger a large quantity of interrupts is avoided, thereby resolving system suspension or firmware suspension.

In a possible implementation of the second aspect, the plurality of to-be-masked objects include at least one of the following: a hardware module in the hardware layer, an interrupt line for transmission of an interrupt, and an interrupt bit of a status register for storing an interrupt. In a possible example, a plurality of layers obtained through layering may include a hardware module layer, an interrupt line layer, and an interrupt bit layer. A to-be-masked object in the hardware module layer may include a plurality of different hardware modules. For example, the to-be-masked object in the hardware module layer includes a CPU, an accelerator, and a storage. A to-be-masked object in the interrupt line layer may include a plurality of different interrupt lines. For example, the to-be-masked object in the interrupt line layer includes a plurality of interrupt lines identified by different interrupt numbers.

In a possible implementation of the second aspect, the interrupt information includes at least one of the following: a hardware module identifier, an interrupt line identifier, and an error type of the non-fatal error and corresponding to the interrupt bit. The hardware module identifier indicates a hardware module in which the non-fatal error corresponding to the interrupt occurs. The interrupt line identifier indicates an interrupt line for transmission of the interrupt. For example, the interrupt line identifier may be an interrupt number. The error type of the non-fatal error and corresponding to the interrupt bit may also be referred to as an error type corresponding to the interrupt or a fault type corresponding to the interrupt, and may be used to determine an interrupt bit of a status register storing the interrupt. For example, the error type may include a single-bit error and a multi-bit error.

In a possible implementation of the second aspect, the non-fatal errors include an RSA specification error and/or a safety error. The method further includes: The kernel driver unmasks the masked object in the plurality of to-be-masked objects after a delay of second duration. In the foregoing possible implementation, the kernel driver unmasks the masked object in the plurality of to-be-masked objects after the delay of second duration, so that system suspension or firmware suspension caused by interrupts triggered by a large quantity of RSA specification errors and/or interrupts triggered by a large quantity of safety errors can be avoided, and processing on an interrupt triggered by a subsequent non-fatal error is not affected, thereby ensuring user experience.

In a possible implementation of the second aspect, the unmasking is performed after processing of a last interrupt in the plurality of interrupts is completed; or the unmasking is performed in sequence. In the foregoing possible implementations, when impact of the interrupt after the first duration is large, unmasking may be performed as early as possible after the processing of the last interrupt in the plurality of interrupts is completed, to reduce impact caused by interrupt masking. When impact of the interrupt after the first duration is small, unmasking is performed in sequence, to avoid that an interrupt that is of a to-be-masked object and that is after the first duration is masked for a long time period, thereby ensuring performance of different to-be-masked objects.

In a possible implementation of the second aspect, the non-fatal error further includes a non-RSA specification error, and the firmware includes first firmware and second firmware. The first firmware is configured to mask an interrupt triggered by the RSA specification error and/or an interrupt triggered by the safety error, and the second firmware is configured to mask or unmask an interrupt triggered by the non-RSA specification error. The first firmware communicates with the kernel driver through an advanced platform error interface APEI, and the second firmware communicates with the kernel driver through an inter-core error message IPEM interface.

According to a third aspect, an interrupt processing device is provided, and is used in firmware, where the firmware is configured to run on a hardware layer. The apparatus includes: a receiving unit, configured to receive a plurality of interrupts in a first duration, where the plurality of interrupts are triggered when non-fatal errors occur in the hardware layer; a processing unit, configured to mask, based on interrupt information and layered masking information of the plurality of interrupts, an interrupt that is of a target to-be-masked object corresponding to the plurality of interrupts and that is after the first duration, where the layered masking information indicates a plurality of to-be-masked objects, a plurality of to-be-masked objects are obtained by layering transmission of the interrupts, and the plurality of to-be-masked objects include the target to-be-masked object; and a sending unit, configured to send the interrupt information of the plurality of interrupts to a kernel driver.

In a possible implementation of the third aspect, the plurality of to-be-masked objects include at least one of the following: a hardware module in the hardware layer, an interrupt line for transmission of an interrupt, and an interrupt bit of a status register for storing an interrupt.

In a possible implementation of the third aspect, the processing unit is further configured to: when the plurality of interrupts belong to the target to-be-masked object, and a quantity of the plurality of interrupts reaches a preset threshold corresponding to the target to-be-masked object, mask the interrupt that is of the target to-be-masked object and that is after the first duration, where interrupt information of each interrupt indicates a to-be-masked object corresponding to the interrupt.

In a possible implementation of the third aspect, the interrupt information includes at least one of the following: a hardware module identifier, an interrupt line identifier, and an error type of the non-fatal error and corresponding to the interrupt bit.

In a possible implementation of the third aspect, the processing unit is further configured to: when the interrupt information includes the hardware module identifier, determine, based on the hardware module identifier in the interrupt information of each interrupt, a hardware module to which each interrupt belongs; when the interrupt information includes the interrupt line identifier, determine, based on the interrupt line identifier in the interrupt information of each interrupt, an interrupt line to which each interrupt belongs; and/or when the interrupt information includes the error type of the non-fatal error and corresponding to the interrupt bit, determine, based on the error type in the interrupt information of each interrupt, an interrupt bit to which each interrupt belongs.

In a possible implementation of the third aspect, the hardware layer includes a first hardware system, the firmware includes first firmware running on the first hardware system, the non-fatal errors include an RSA specification error and/or a safety error, and the first firmware is configured to mask a to-be-masked object corresponding to the RSA specification error and/or a to-be-masked object corresponding to the safety error.

In a possible implementation of the third aspect, the hardware layer further includes a second hardware system, the firmware further includes second firmware running on the second hardware system, the non-fatal errors include a non-RSA specification error, and the second firmware is configured to mask a to-be-masked object corresponding to the non-RSA specification error.

In a possible implementation of the third aspect, for the non-RSA specification error, the processing unit is further configured to: unmask the masked object in the plurality of to-be-masked objects after a delay of second duration.

In a possible implementation of the third aspect, the unmasking is performed after processing of a last interrupt in the plurality of interrupts is completed; or the unmasking is performed in sequence.

According to a fourth aspect, an interrupt processing device is provided, and is used in a kernel driver, where the kernel driver is configured to run on a hardware layer. The apparatus includes: a receiving unit, configured to receive interrupt information of a plurality of interrupts sent by firmware, where the plurality of interrupts are received by the firmware in a first duration, and the plurality of interrupts are triggered when non-fatal errors occur in the hardware layer; and a processing unit, configured to process the plurality of interrupts based on the interrupt information of the plurality of interrupts, where an interrupt that is of a target to-be-masked object corresponding to the plurality of interrupts and that is after the first duration is masked by the firmware, the firmware performs masking based on the interrupt information and layered masking information of the plurality of interrupts, a plurality of to-be-masked objects are obtained by layering transmission of the interrupts, and the plurality of to-be-masked objects include the target to-be-masked object.

In a possible implementation of the fourth aspect, the plurality of to-be-masked objects include at least one of the following: a hardware module in the hardware layer, an interrupt line for transmission of an interrupt, and an interrupt bit of a status register for storing an interrupt.

In a possible implementation of the fourth aspect, the interrupt information includes at least one of the following: a hardware module identifier, an interrupt line identifier, and an error type of the non-fatal error and corresponding to the interrupt bit.

In a possible implementation of the fourth aspect, the non-fatal errors include an RSA specification error and/or a safety error, and the processing unit is further configured to: unmask the masked object in the plurality of to-be-masked objects after a delay of second duration.

In a possible implementation of the fourth aspect, the unmasking is performed after processing of a last interrupt in the plurality of interrupts is completed; or the unmasking is performed in sequence.

In a possible implementation of the fourth aspect, the non-fatal error further includes a non-RSA specification error, and the firmware includes first firmware and second firmware. The first firmware is configured to mask an interrupt triggered by the RSA specification error and/or an interrupt triggered by the safety error, and the second firmware is configured to mask or unmask an interrupt triggered by the non-RSA specification error. The first firmware communicates with the kernel driver through an advanced platform error interface APEI, and the second firmware communicates with the kernel driver through an inter-core error message IPEM interface.

According to another aspect of this application, an interrupt processing device is provided. The interrupt processing device includes a processor and a storage. The storage stores instructions, and the processor runs the instructions in the storage, to cause the device to perform the interrupt processing method provided in any one of the first aspect or the possible implementations of the first aspect, or any one of the second aspect or the possible implementations of the second aspect.

According to another aspect of this application, an interrupt processing device is provided. The interrupt processing device includes a hardware layer, and firmware and a kernel driver that run on the hardware layer. The firmware includes the interrupt processing device provided in any one of the third aspect or the possible implementations of the third aspect, and the kernel driver includes the interrupt processing device provided in any one of the fourth aspect or the possible implementations of the fourth aspect.

According to still another aspect of this application, a computer-readable storage medium is provided. The computer-readable storage medium stores instructions, and when the instructions are executed by a device, the device is caused to perform the interrupt processing method provided in any one of the first aspect or the possible implementations of the first aspect.

According to still another aspect of this application, a computer-readable storage medium is provided. The computer-readable storage medium stores instructions, and when the instructions are executed by a device, the device is caused to perform the interrupt processing method provided in any one of the second aspect or the possible implementations of the second aspect.

According to still another aspect of this application, a computer program product is provided. The computer program product includes a computer program (which may also be referred to as code or instructions). When the computer program runs, a computer is caused to perform the interrupt processing method provided in any one of the first aspect or the possible implementations of the first aspect.

According to still another aspect of this application, a computer program product is provided. The computer program product includes a computer program (which may also be referred to as code or instructions). When the computer program runs, a computer is caused to perform the interrupt processing method provided in any one of the second aspect or the possible implementations of the second aspect.

It may be understood that, for beneficial effects that can be achieved by any one of the interrupt processing device, the interrupt processing device, the computer-readable storage medium, and the computer program product provided above, correspondingly, refer to the beneficial effects in the interrupt processing method provided above. Details are not described herein again.

### BRIEF DESCRIPTION OF DRAWINGS

FIG. 1 is a diagram of a structure of a hardware layer of an electronic device according to an embodiment of this application;
FIG. 2 is a diagram of a structure of a software layer of an electronic device according to an embodiment of this application;
FIG. 3 is a schematic flowchart of an interrupt processing method according to an embodiment of this application;
FIG. 4 is a schematic flowchart of another interrupt processing method according to an embodiment of this application;
FIG. 5 is a diagram of a type of interrupt processing according to an embodiment of this application;
FIG. 6 is a diagram of another type of interrupt processing according to an embodiment of this application;
FIG. 7 is a diagram of a structure of an interrupt processing device according to an embodiment of this application;
FIG. 8 is a diagram of a structure of another interrupt processing device according to an embodiment of this application;
FIG. 9 is a diagram of a structure of an interrupt processing device according to an embodiment of this application;
FIG. 10 is a diagram of a structure of another interrupt processing device according to an embodiment of this application; and
FIG. 11 is a diagram of a structure of a chip according to an embodiment of this application.

### DESCRIPTION OF EMBODIMENTS

The making and use of embodiments are discussed in detail below. However, it should be understood that a plurality of applicable inventive concepts provided in this application can be implemented in a plurality of specific environments. The specific embodiments discussed are merely illustrative of specific manners to implement and use this specification and the technologies, and do not limit the scope of this application.

Unless otherwise defined, all technical terms used in this specification have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not started), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, words such as "first" and "second" are used to distinguish between objects with similar names, functions, or effects. A person skilled in the art may understand that the words such as "first" and "second" do not limit a quantity and an execution sequence. The word "coupling" is used for indicating an electrical connection, including a direct connection through a wire or a connection end or an indirect connection through another device. Therefore, the "coupling" should be considered as a generalized electronic communication connection.

It should be noted that in this application, the word like "example" or "for example" is used for indicating giving an example, an illustration, or a description. Any embodiment or design solution described as an "example" or "for example" in this application should not be explained as having more advantages than another embodiment or design solution. To be precise, use of the word like "example" or "for example" is intended to present a related concept in a specific manner.

The technical solutions in this application may be applied to various electronic devices, or may be applied to a chip of an electronic device. For example, the chip may be a system on a chip (system on a chip, SoC). The electronic device may include but is not limited to a mobile phone, a tablet computer, a notebook computer, a wearable device, a computer, an ultra-mobile personal computer (ultra-mobile personal computer, UMPC), a netbook, a video camera, a camera, a vehicle-mounted device (for example, a car, a bicycle, an electric vehicle, an airplane, a ship, a train, or a high-speed railway), a virtual reality (virtual reality, VR) device, an augmented reality (augmented reality, AR) device, or the like.

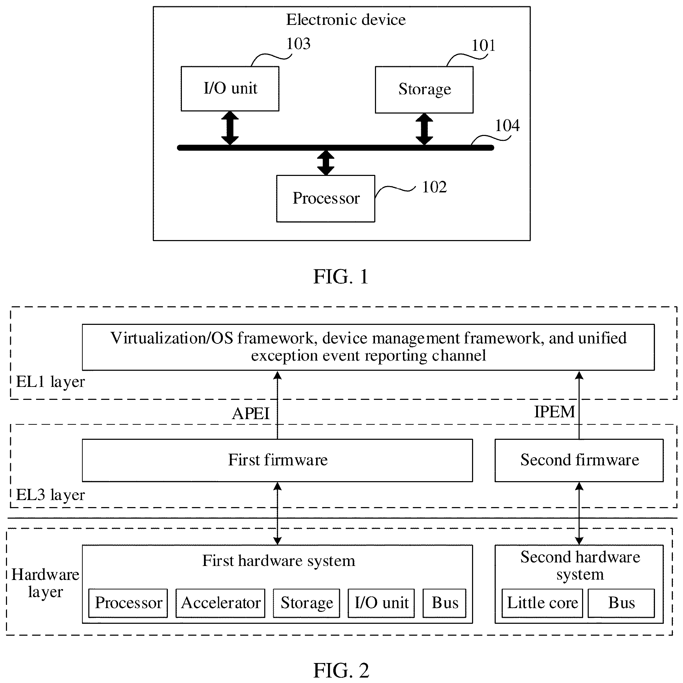

FIG. 1 is a diagram of a structure of a hardware layer of an electronic device according to an embodiment of this application. The electronic device may include a storage 101, a processor 102, an input/output (input/output, I/O) unit 103, and a bus (bus) 104. The storage 101, the processor 102, and the I/O unit 103 are connected to each other through the bus 104.

The storage 101 may be configured to store data, a software program, and a module, and mainly includes a program storage area and a data storage area. The program storage area may store an operating system and an application program required by at least one function, for example, a sound playing function and an image display function. The data storage area may store data created based on use of the electronic device, for example, audio data, image data, and a phonebook. In some feasible embodiments, the storage 101 may include one storage, or may include a plurality of storages. The storage may include but is not limited to a random access memory (random access memory, RAM), a double data rate synchronous dynamic random access memory (double data rate synchronous dynamic random access memory, DDR SRAM) (DDR for short), a high bandwidth memory (high bandwidth memory, HBM), a read-only memory (read-only memory, ROM), a programmable read-only memory (programmable read-only memory, PROM), an erasable programmable read-only memory (erasable programmable read-only memory, EPROM), an electrically erasable programmable read-only memory (electrically erasable programmable read-only memory, EEPROM), a flash memory, and the like. In addition, the storage may further include: a floppy disk, a hard disk drive like a built-in hard disk drive and a removable hard disk drive, a magnetic disk, an optical disc, a magneto-optical disc like a compact disc read-only memory (compact disc read-only memory, CD_ROM) and a digital video disc (digital video disc read-only memory, DVD_ROM), or a storage medium of any other form well-known in the art.

The processor 102 is configured to control and manage an action of the electronic device, for example, perform various functions of the electronic device and process data by running or executing the software program and/or the module stored in the storage 101 and invoking the data stored in the storage 101, to perform overall control on the electronic device. Optionally, the processor 102 may include one or more processing units. The processing unit may include a central processing unit (central processing unit, CPU), an application processor, a general-purpose processor, an accelerator, and the like. The accelerator may include but is not limited to: a digital signal processor (digital signal processor, DSP), a network processing unit (network processing unit, NPU), a graphics processing unit (graphic processing unit, GPU), an image signal processor (image signal processor, ISP), a matrix computing unit, a video decoder (video decoder, VDEC), a video encoder (video encoder, VENC), a microcontroller, a microprocessor, or the like. Further, the processor 102 may further include another hardware circuit or accelerator, for example, an application-specific integrated circuit, a field programmable gate array or another programmable logic device, a transistor logic device, a hardware component, or any combination thereof. Optionally, the processor 102 may alternatively be a combination implementing a computing function, for example, a combination including one or more microprocessors, or a combination of a digital signal processor and a microprocessor.

The I/O unit 103 may be configured to implement an input function and an output function of the electronic device. In some feasible embodiments, the I/O unit 103 may include an input unit and an output unit. The input unit may be configured to: receive input digit or character information, and generate a key signal input related to user settings and function control of the electronic device. For example, the input unit may include a touchscreen and another input device. The touchscreen may collect a touch operation of a user on or near the touchscreen (for example, an operation of the user on or near the touchscreen by using any suitable object or accessory like a finger or a stylus), and drive a corresponding connection apparatus based on a preset program. Optionally, the another input device may include but is not limited to one or more of a physical keyboard, a function button (like a volume control button or a power button), a trackball, a mouse, a joystick, or the like. The display unit may be configured to display information input by the user or information provided for the user, and various menus of the electronic device. In an example, the display unit may include a display screen, and the display screen may be configured in a form of a liquid crystal display (liquid crystal display, LCD), an organic light-emitting diode (organic light-emitting diode, OLED), or the like. Further, the touchscreen may cover the display screen. After detecting the touch operation on or near the touchscreen, the touchscreen transfers the touch operation to the processor 102 to determine a type of a touch event, and then the processor provides a corresponding visual output on the display screen based on the type of the touch event. In the foregoing descriptions, the touchscreen and the display screen serve as two independent components to implement the input function and the output function of the electronic device. However, in some embodiments, the touchscreen and the display screen may be integrated to implement the input function and the output function of the electronic device.

The bus 104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

Further, the electronic device may further include a power supply (for example, a battery) that supplies power to each component. The power supply may be logically connected to the processor 102 by using a power management system, to implement functions such as charging management, discharging management, and power consumption management by using the power management system.

Although not shown, the electronic device may further include a radio frequency (radio frequency, RF) circuit, a sensing component, an audio circuit, a wireless fidelity (wireless fidelity, Wi-Fi) module, a Bluetooth module, and the like. Details are not described herein again in this embodiment of this application. A person skilled in the art may understand that the structure of the electronic device shown in FIG. 1 does not constitute any limitation on the electronic device, and the electronic device may include more or fewer components than those shown in the figure, combine some components, or have different component arrangements.

In a possible embodiment, the hardware layer of the electronic device may include a first hardware system and a second hardware system. The first hardware system may be referred to as a general-purpose hardware system, and the second hardware system may be referred to as a little-core hardware system or a dedicated hardware system. For example, the first hardware system may include one or more processors (for example, CPUs), an accelerator, a storage, an I/O interface, a bus, and the like. The second hardware system may include one or more little cores (little cores), a bus, and the like.

The first hardware system may be used to implement integrity design of hardware and software, fault detection, fault recording, hardware error correction, a suppression capability, and the like. The second hardware system may be an independent power supply clock domain design, an independent bus design, a sensor IP, and a dual-fault reporting capability. In comparison with the first hardware system, the second hardware system can provide more secure and reliable fault detection, recording, error correction, and error detection capabilities.

FIG. 2 is a diagram of a structure of a software layer of an electronic device according to an embodiment of this application. The software layer runs on a hardware layer of the electronic device. The software layer may include an EL3 layer and an EL1 layer. The EL3 layer may also be referred to as a firmware layer.

The EL3 layer may include one or more pieces of firmware. In a possible embodiment, an example in which the hardware layer of the electronic device includes a first hardware system and a second hardware system is used. The EL3 layer may include first firmware running on the first hardware system and second firmware running on the second hardware system. The first firmware may be trusted firmware (trusted firmware, TF). In a possible example, the first firmware may communicate with the EL1 layer through an advanced platform error interface (advanced platform error interface, APEI), and the second firmware may communicate with the EL1 layer through an inter-core error message (inter-processor error message, IPEM) interface.

The EL1 layer may include one or more of a kernel driver, an operating system (operating system, OS), a management framework, an operator, an application program, and the like. In a possible example, the EL1 layer may include a virtualization framework/an OS framework, a device management framework, and a unified exception event reporting channel, and may further include related operators or application programs of functions such as node isolation, fault recovery/function degradation/plane switching/a self-driving exiting system intrusion detection, single-machine warning, and maintenance and testing.

In embodiments of this application, the hardware layer may be configured to be responsible for fault detection, error correction, and suppression. The EL3 layer may be configured to: provide a unified interrupt fault reporting interface, and be responsible for fault interrupt counting and masking functions. The EL1 layer may be configured to be responsible for aggregating interrupts reported by EL3 to a fault management framework, and performing different unmasking operations according to an unmasking strategy.

It may be understood that, in FIG. 2, the example in which the hardware layer includes the first hardware system and the second hardware system is merely used for describing the structure of the software layer of the electronic device, and does not constitute any limitation on embodiments of this application. The software layer may further include more or fewer software structures than those shown in the figure, combine some software structures, or have different software structure arrangements.

During the use of the electronic device, a large quantity of non-fatal errors (non-fatal errors, NFEs) usually occur suddenly. The non-fatal errors may include correctable errors (correctable errors, CEs), non-fatal uncorrectable errors, and the like. The non-fatal error is usually generated by a hardware module in the electronic device or a chip. The hardware module may be a CPU, a storage, an accelerator, another component, or the like. For example, the storage may be a memory, and the memory may be a double data rate synchronous dynamic random access memory (double data rate synchronous dynamic random access memory, DDR SRAM) (DDR for short) or a high bandwidth memory (high bandwidth memory, HBM). The memory is used as an example. There are usually two reasons for sudden occurrence of the large quantity of non-fatal errors: An area in which faults occur is large (for example, exceptions simultaneously occur a plurality of pages of the memory); and an access frequency of the fault area is high, and this mainly depends on a service scenario of a device and a periodicity of memory fault inspection (for example, scrub inspection). These non-fatal errors trigger a large quantity of interrupts, affecting normal service access and even causing system suspension or suspension of firmware (firmware) in a system.

In related technologies, a strategy for implementing counting of correctable errors and threshold control on the hardware module is provided. Specifically, for the CPU, correctable errors that occur on all industrial input/output (industrial input/output, IIO) submodules and ultra path interconnect (ultra path interconnect, UPI) links are counted, and when a counted quantity reaches a threshold, a corresponding event is triggered. For the IIO submodule, reporting may be performed based on a system management interrupt (system management interrupt, SMI). For the UPI link, reporting may be performed based on a correctable system management interrupt (correctable system management interrupt, CSMI). For the memory, correctable errors are counted based on each memory bank (bank) in the memory, and interrupt reporting is triggered based on a funnel algorithm. For specific reporting, the SMI, a non-maskable interrupt (non-maskable interrupt, NMI), or ERROR_N[0] may be used. The foregoing reporting is used only for a platform and is invisible to the operating system (operating system, OS) and a virtual machine monitor (virtual machine monitor, VMM).

This method implements error counting and threshold control by using hardware-based technologies, but has poor flexibility. In addition, in consideration of costs, during actual application, the method usually supports only key hardware modules, for example, a CPU and a storage, and hardware-based error counting and threshold control are not performed on all hardware modules. Consequently, the method has a poor effect.

In view of this, embodiments of this application provide an interrupt processing method. The method may be used to: when non-fatal errors trigger a plurality of interrupts in a first duration, mask, based on interrupt information and layered masking information of the plurality of interrupts, an interrupt that is of a target to-be-masked object corresponding to the plurality of interrupts and that is after the first duration. The layered masking information indicates a plurality of to-be-masked objects, the plurality of to-be-masked objects are obtained through layering, and the plurality of to-be-masked objects include the target to-be-masked object. This avoids a case in which a large quantity of non-fatal errors trigger a large quantity of interrupts, that is, suppresses generation of an interrupt storm. In this way, system suspension or firmware suspension is resolved, and flexibility of interrupt masking is improved.

In embodiments of this application, an interrupt may be a signal used to suspend execution of a current program by a processor and switch to processing of a program corresponding to a new case. The interrupt may be usually triggered when a fault or an error occurs in a hardware module of a device, and the corresponding hardware module that triggers the interrupt may also be referred to as an interrupt source. An interrupt line may be a channel used to transmit an interrupt triggered by an interrupt source to an interrupt controller. Usually, one interrupt source may correspond to a plurality of interrupt lines. An interrupt bit may also be referred to as an interrupt status flag bit, and may indicate an error type corresponding to an error that triggers an interrupt. Usually, one interrupt line may correspond to a plurality of interrupt bits.

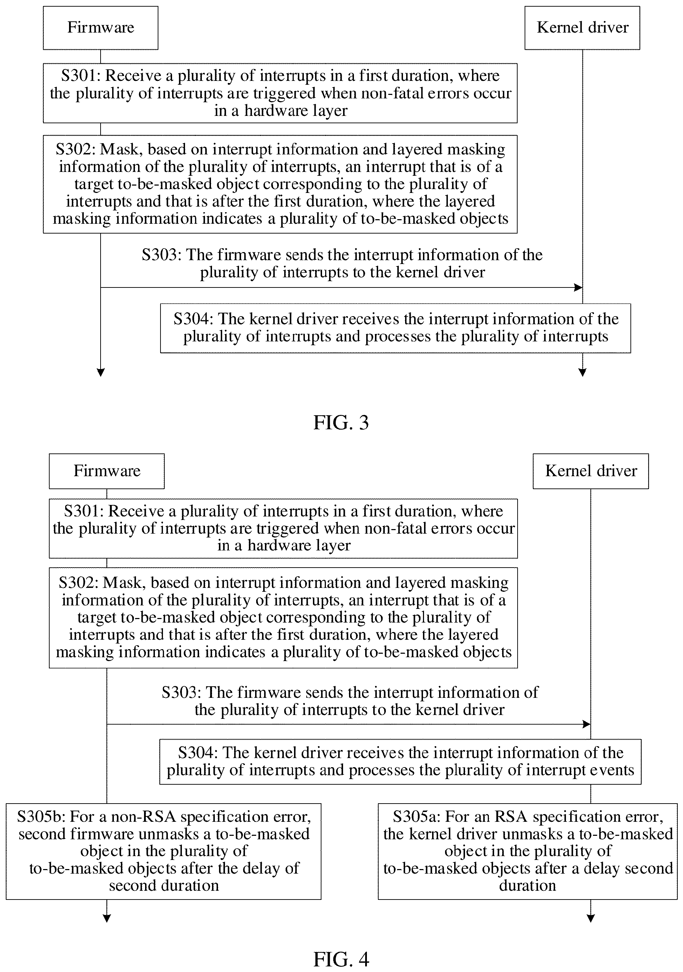

FIG. 3 is a diagram of a structure of an interrupt processing method according to an embodiment of this application. The method may include the following steps. The method may be applied to an interrupt processing device. An example in which the interrupt processing device includes a hardware layer, and firmware and a kernel driver that run on the hardware layer is used. For example, the interrupt processing device may be the electronic device provided above.

S301: The firmware receives a plurality of interrupts in a first duration, where the plurality of interrupts are triggered when non-fatal errors occur in the hardware layer.

The hardware layer includes a plurality of hardware modules. For example, the hardware modules may include a processor, an accelerator, a storage, an I/O unit, a sensor, a bus, and the like. For example, the processor may include a central processing unit CPU, an application processor, a general-purpose processor, and the like. The accelerator may include a digital signal processor DSP, a network processing unit NPU, a graphics processing unit GPU, an image signal processor ISP, a matrix computing unit, a video decoder VDEC, a video encoder VENC, and the like. The storage may include a memory. For example, the memory may be a DDR or an HBM.

In addition, the non-fatal errors may include correctable errors (correctable errors, CEs) and non-fatal uncorrectable errors. The non-fatal errors are classified according to a reliability, availability, and serviceability (reliability availability serviceability, RSA) specification, and may include an RSA specification error and a non-RSA specification error. The non-fatal errors may further include errors classified according to another protocol specification. For example, the non-fatal errors may further include a safety (safety) error.

In a possible embodiment, when a plurality of non-fatal errors occur in the hardware modules in the hardware layer, each of the plurality of non-fatal errors triggers one interrupt. In this case, the plurality of non-fatal errors can trigger a plurality of interrupts, so that the firmware can receive the plurality of interrupts. The plurality of non-fatal errors may be non-fatal errors that occur in the hardware module in the hardware layer in the first duration, and one interrupt is triggered each time one non-fatal error occurs, so that the firmware can receive the plurality of interrupts in the first duration. The first duration may be preset. For example, the first duration may be five seconds, 10 seconds, 20 seconds, or the like. A specific value of the first duration is not limited in this embodiment of this application.

S302: The firmware masks, based on interrupt information and layered masking information of the plurality of interrupts, an interrupt that is of a target to-be-masked object corresponding to the plurality of interrupts and that is after the first duration, where the layered masking information indicates a plurality of to-be-masked objects, a plurality of to-be-masked objects are obtained by layering transmission of the interrupts, and the plurality of to-be-masked objects include the target to-be-masked object.

The interrupt information of the plurality of interrupts may include interrupt information of each of the plurality of interrupts. The interrupt information of the plurality of interrupts may be obtained by the firmware based on the plurality of interrupts. For example, the firmware may parse each received interrupt to obtain the corresponding interrupt information, or the firmware may obtain the interrupt information of each interrupt through querying. This is not specifically limited in this embodiment of this application.

Optionally, the interrupt information of each interrupt may include at least one of the following: a hardware module identifier, an interrupt line identifier, and an error type of a non-fatal error and corresponding to the interrupt. The hardware module identifier indicates a hardware module in which the non-fatal error corresponding to the interrupt occurs. The interrupt line identifier indicates an interrupt line for transmission of the interrupt. For example, the interrupt line identifier may be an interrupt number. The error type of the non-fatal error and corresponding to the interrupt may also be referred to as an error type corresponding to the interrupt or a fault type corresponding to the interrupt, and may indicate an interrupt bit of a status register storing the interrupt. For example, the error type may include a single-bit error and a multi-bit error.

In addition, a plurality of layers obtained through layering may include one or more of a hardware module layer, an interrupt line layer, and an interrupt bit layer. The plurality of to-be-masked objects may include one or more to-be-masked objects in each layer. In a possible example, the plurality of layers may include the hardware module layer, the interrupt line layer, and the interrupt bit layer. A to-be-masked object in the hardware module layer may include a plurality of different hardware modules. For example, the to-be-masked object in the hardware module layer includes a CPU, an accelerator, and a storage. A to-be-masked object in the interrupt line layer may include a plurality of different interrupt lines. For example, the to-be-masked object in the interrupt line layer includes a plurality of interrupt lines identified by different interrupt numbers. A to-be-masked object in the interrupt bit layer may include different interrupt bit layers. For example, the to-be-masked object in the interrupt bit layer includes interrupt bits corresponding to different error types.

In a possible embodiment, the interrupt information of each interrupt may indicate to-be-masked objects corresponding to the interrupt in a plurality of layers. That the firmware masks, based on the interrupt information and the layered masking information of the plurality of interrupts, the interrupt that is of the target to-be-masked object corresponding to the plurality of interrupts and that is after the first duration may include: When the plurality of interrupts belong to the target to-be-masked object in the plurality of to-be-masked objects, and a quantity of the plurality of interrupts reaches a preset threshold corresponding to the target to-be-masked object, the firmware masks the interrupt that is of the target to-be-masked object and that is after the first duration.

For example, when receiving an interrupt, the firmware may determine, based on a hardware module identifier, an interrupt number, and an error type in interrupt information of the interrupt, a hardware module, an interrupt line, and an interrupt bit corresponding to the interrupt. Then, the firmware may count, based on different layers, a quantity of interrupts corresponding to each hardware module that triggers the interrupt, a quantity of interrupts corresponding to each interrupt line, and a quantity of interrupts corresponding to each interrupt bit. When a quantity of interrupts corresponding to a hardware module reaches a preset threshold, the hardware module is a target to-be-masked object, and the firmware masks an interrupt that is of the hardware module and that is after a first duration. When a quantity of interrupts corresponding to an interrupt line reaches a preset threshold, the interrupt line is a target to-be-masked object, and the firmware masks an interrupt that is of the interrupt line and that is after a first duration. When a quantity of interrupts corresponding to an interrupt bit reaches a preset threshold, the interrupt bit is a target to-be-masked object, and the firmware masks an interrupt that is of the interrupt bit and that is after a first duration.

It may be understood that preset thresholds corresponding to the to-be-masked objects in the plurality of layers may be the same or different, and preset thresholds corresponding to different to-be-masked objects in a same layer may also be the same or different. Specifically, preset thresholds may be set by a person skilled in the art based on actual requirements. This is not specifically limited in this embodiment of this application.

S303: The firmware sends the interrupt information of the plurality of interrupts to the kernel driver. There may be no sequence between S303 and S302. In FIG. 3, an example in which S303 is after S302 is used for description.

Optionally, the firmware may further send other information of each of the plurality of interrupts to the kernel driver. For example, the other information may include an interrupt address, an interrupt priority, and the like. This is not specifically limited in this embodiment of this application. The interrupt information and the other information of each interrupt may be sent together (that is, through one time of sending), or may be sent separately (that is, through a plurality of times of sending).

In a possible embodiment, when the firmware receives each of the plurality of interrupts, during interrupt counting and masking based on the related descriptions in S302, the firmware may further send the interrupt information of the interrupt to the kernel driver. Optionally, an operating system OS further runs on the hardware layer of the interrupt processing device. The firmware may send the interrupt information of the interrupt to the operating system OS, and the operating system OS sends the interrupt information of the interrupt to the kernel driver.

S304: The kernel driver receives the interrupt information of the plurality of interrupts and processes the plurality of interrupts.

In a possible embodiment, for each interrupt in the plurality of interrupts, when receiving the interrupt information of the interrupt and sent by the firmware, the kernel driver may process the interrupt based on the interrupt information, and process a next interrupt after the processing is completed, until processing of the plurality of interrupts is completed.

In embodiments of this application, when receiving, in the first duration, the plurality of interrupts that are triggered by the non-fatal errors, the firmware may send the corresponding interrupt information to the kernel driver, so that the kernel driver processes the plurality of interrupts. In addition, the firmware may further mask, based on the interrupt information and the layered masking information of the plurality of interrupts, the interrupt that is of the target to-be-masked object corresponding to the plurality of interrupts and that is after the first duration. The layered masking information indicates the plurality of to-be-masked objects, the plurality of to-be-masked objects are obtained by layering the transmission of the interrupts, and the plurality of to-be-masked objects include the target to-be-masked object. Therefore, according to a strategy of layered masking, a case in which a large quantity of non-fatal errors trigger a large quantity of interrupts is avoided, thereby resolving system suspension or firmware suspension, and improving flexibility of interrupt masking.

Further, the hardware layer of the interrupt processing device includes a first hardware system, the firmware includes first firmware running on the first hardware system, the non-fatal errors include an RSA specification error and/or a safety error, and the first firmware may be configured to mask a to-be-masked object corresponding to the RSA specification error and/or a to-be-masked object corresponding to the safety error. In other words, the first firmware may receive a plurality of interrupts triggered by RSA specification errors and/or safety errors, and mask, based on interrupt information and layered masking information of the plurality of interrupts, an interrupt of a target to-be-masked object corresponding to the plurality of interrupts. Optionally, the first firmware communicates with the kernel driver through an advanced platform error interface APEI. In this way, the first firmware may send the interrupt information to the kernel driver through the APEI, and the kernel driver processes the interrupt corresponding to the RSA specification error and/or the interrupt corresponding to the safety error.

In another possible embodiment, the hardware layer of the interrupt processing device further includes a second hardware system, the firmware further includes second firmware running on the second hardware system, the non-fatal errors include a non-RSA specification error, and the second firmware is configured to mask a to-be-masked object corresponding to the non-RSA specification error. In other words, the second firmware may receive a plurality of interrupts triggered by non-RSA specification errors, and mask, based on interrupt information and layered masking information of the plurality of interrupts, an interrupt of a target to-be-masked object corresponding to the plurality of interrupts. Optionally, the second firmware communicates with the kernel driver through an inter-core error message IPEM interface. In this way, the second firmware may send the interrupt information to the kernel driver through the IPEM interface, and the kernel driver processes the interrupts corresponding to the non-RSA specification errors.

Further, as shown in FIG. 4, after S304, the method further includes S305a and S305b.

S305a: For the RSA specification error, the kernel driver unmasks the masked object in the plurality of to-be-masked objects after a delay of second duration. In other words, for the interrupts triggered by the RSA specification errors, the first firmware masks the plurality of to-be-masked objects, and the kernel driver unmasks the plurality of to-be-masked objects.

Optionally, for the safety error, the kernel driver may also unmask the masked object in the plurality of to-be-masked objects after the delay of second duration.

S305b: For the non-RSA specification error, the second firmware unmasks the masked object in the plurality of to-be-masked objects after the delay of second duration. In other words, for the interrupts triggered by the non-RSA specification errors, the second firmware masks and unmasks the plurality of to-be-masked objects.

The second duration may be preset. For example, the second duration may be five minutes, eight minutes, 10 minutes, or the like. A specific value of the second duration is not limited in this embodiment of this application. In addition, during unmasking, delayed second durations for to-be-masked objects in different layers may be the same or different, and delayed second durations for different to-be-masked objects in a same layer may also be the same or different. For example, a delayed second duration corresponding to the hardware module may be eight minutes, and a delayed second duration corresponding to the interrupt line may be five minutes. Alternatively, a delayed second duration corresponding to the CPU in the hardware module may be five minutes, and a delayed second duration corresponding to the storage may be eight minutes.

In a possible embodiment, when unmasking the masked object, the kernel driver may unmask the masked object after the delay of second duration after processing of a last interrupt in the plurality of interrupts is completed. For example, when a plurality of interrupts are triggered because a plurality of non-fatal errors occur in the CPU in the hardware module in the first duration, and the firmware masks an interrupt that is of the CPU and that is after the first duration, the kernel driver may unmask the CPU after the delay of second duration after processing of a last interrupt in the plurality of interrupts triggered by the CPU is completed.

In another possible embodiment, when unmasking the masked objects, the kernel driver may unmask the masked objects in sequence. For example, if the firmware masks an interrupt of the CPU in the hardware module, an interrupt of the storage in the hardware module, and an interrupt of the I/O unit in the hardware module in sequence, the kernel driver may perform unmasking in sequence, specifically including: unmasking the CPU after the interrupt of the CPU is masked for the second duration, unmasking the storage after the interrupt of the storage is masked for the second duration, and unmasking the I/O unit after the interrupt of the I/O unit is masked for the second duration.

Optionally, when the interrupt processing device is unavailable because a masked to-be-masked object in the to-be-masked objects in the different layers is unmasked, or the interrupt processing device needs to be reset during unmasking, the kernel driver may not unmask the to-be-masked object. When use of the interrupt processing device is not affected after a masked to-be-masked object in the to-be-masked objects in the different layers is unmasked, or the interrupt processing device does not need to be reset, the kernel driver may unmask the masked object based on the related descriptions of unmasking.

In this embodiment of this application, the kernel driver unmasks the masked object in the plurality of to-be-masked objects after the second duration, so that the system suspension or the firmware suspension caused by the interrupts triggered by the large quantity of non-fatal errors can be avoided, and processing by the kernel driver on an interrupt triggered by a subsequent non-fatal error is not affected, thereby ensuring user experience. In addition, in the foregoing possible implementations, when impact of the interrupt after the first duration is large, unmasking may be performed as early as possible after the processing of the last interrupt in the plurality of interrupts is completed, to reduce impact caused by interrupt masking. When impact of the interrupt after the first duration is small, unmasking is performed in sequence, to avoid that an interrupt that is of a to-be-masked object and that is after the first duration is masked for a long time period, thereby ensuring performance of different to-be-masked objects.

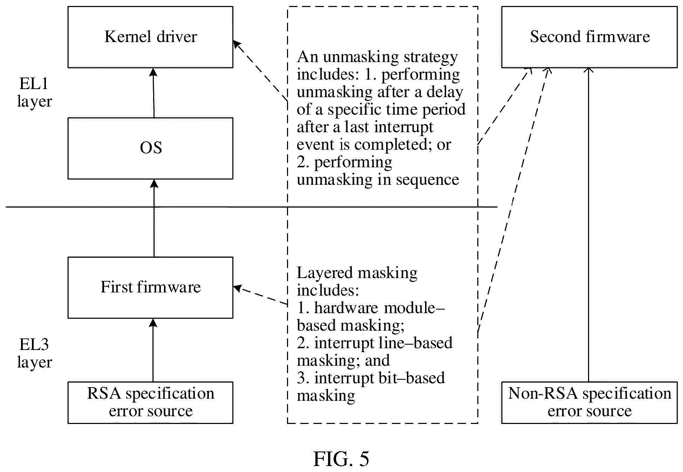

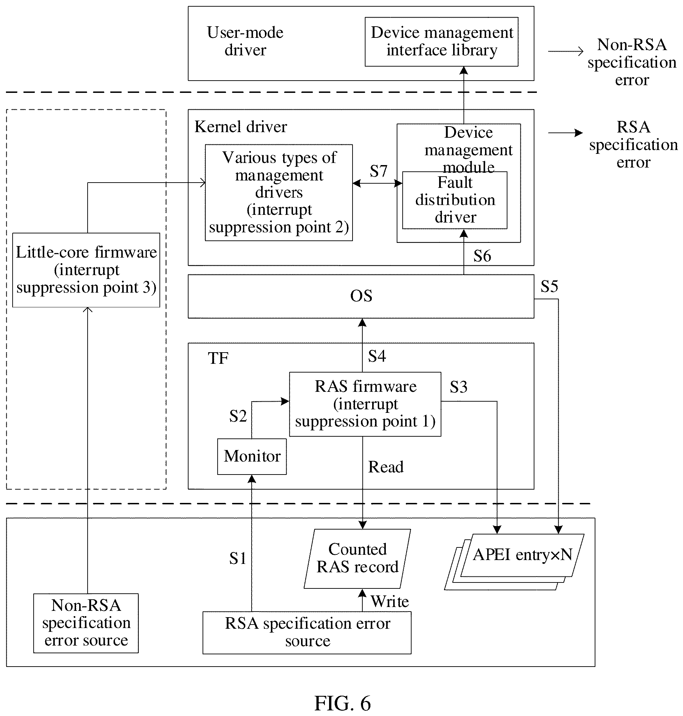

For ease of understanding, the following describes, from different aspects and perspectives by using FIG. 5 and FIG. 6, the solutions provided in embodiments of this application by using examples.

In a possible embodiment, as shown in FIG. 5, the interrupt processing device includes an EL1 layer and an EL3 layer. The EL1 layer includes an operating system OS and a kernel driver, and the EL3 layer includes first firmware and second firmware. For RSA specification errors, the method may include: When the RSA specification errors occur in a hardware layer and interrupts are triggered, the first firmware receives the interrupts triggered by the RSA specification errors, and masks to-be-masked objects in different layers according to the strategy of layered masking described in S302, where the layered masking may include hardware module-based masking, interrupt line-based masking, and interrupt bit-based masking. The first firmware sends, to the kernel driver via the operating system OS, interrupt information corresponding to the interrupts, and the kernel driver processes the interrupts and performs unmasking according to an unmasking strategy, where the unmasking strategy may include performing unmasking after a delay of a specific time period after processing of a last interrupt is completed, or performing unmasking in sequence. For non-RSA specification errors, the method may include: When the non-RSA specification errors occur in a hardware layer and interrupts are triggered, the second firmware receives the interrupt triggered by the non-RSA specification errors, and masks to-be-masked objects in different layers according to the strategy of layered masking described in S302, where the layered masking may include hardware module-based masking, interrupt line-based masking, and interrupt bit-based masking. The second firmware performs unmasking according to an unmasking strategy, where the unmasking strategy may include performing unmasking after a delay of a specific time period after processing of a last interrupt is completed, or performing unmasking in sequence.

In another possible embodiment, as shown in FIG. 6, the interrupt processing device includes a hardware layer, and little-core firmware, trusted firmware TF, an operating system OS, and a kernel driver that run on the hardware layer. The trusted firmware TF includes a monitor (monitor) and RAS firmware. The kernel driver includes a device management module and various types of management drivers. The device management module includes a fault distribution driver. Optionally, the interrupt processing device may further include a user-mode driver, and the user-mode driver includes a device management interface library.

For RSA specification errors, the method may include: S1: An RSA specification error source in the hardware layer triggers serial peripheral interface (serial peripheral interface, SPI) interrupts. S2: When receiving the SPI interrupts, the monitor in the trusted firmware submits a read RAS record to the RAS firmware. In this way, after the RSA specification error source writes the RAS record, the RAS firmware may read the RAS record, that is, count a quantity of RAS specification errors (or referred to as triggered interrupts). S3: The RAS firmware generates an APEI entry (that is, interrupt information sent through an APEI). APEI entry×N indicates an APEI entry that has been generated. S4: Software notifies the operating system OS by using interrupts. S5: The operating system OS reads the APEI entry. S6: The operating system OS notifies the device management module of faults (that is, the RAS specification error). S7: The fault distribution driver in the device management module distributes the faults to the various types of management drivers, so that the various types of management drivers process the RAS errors. The trusted firmware, as an interrupt suppression point 1, may mask to-be-masked objects in different layers according to a strategy of layered masking. The various types of management drivers, as an interrupt suppression point 2, may unmask the to-be-masked objects in the different layers according to an unmasking strategy.

For non-RSA specification errors, the little-core firmware may receive interrupts triggered by the non-RSA specification errors and mask to-be-masked objects in different layers according to the strategy of layered masking described in S302, and may further perform unmasking according to an unmasking strategy. For an interrupt that has been received, the little-core firmware may further send interrupt information to the various types of management drivers, so that the various types of management drivers perform interrupt processing for the non-RAS error. The little-core firmware, as an interrupt suppression point 3, may mask the to-be-masked objects in the different layers according to the strategy of layered masking, and unmask the to-be-masked objects in the different layers according to the unmasking strategy.

The RSA specification error source in FIG. 5 and FIG. 6 represents a hardware module in which an RSA specification error occurs, and a non-RSA specification error source represents a hardware module in which a non-RSA specification error occurs.

In embodiments of this application, when receiving, in a first duration, a plurality of interrupts that are triggered by non-fatal errors, the firmware may send corresponding interrupt information to the kernel driver, so that the kernel driver processes the plurality of interrupts. In addition, the firmware may further mask, based on the interrupt information and layered masking information of the plurality of interrupts, an interrupt that is of a target to-be-masked object corresponding to the plurality of interrupts and that is after the first duration. The layered masking information indicates the plurality of to-be-masked objects, and the plurality of to-be-masked objects are obtained through layering. Therefore, according to the strategy of layered masking, a case in which a large quantity of non-fatal errors trigger a large quantity of interrupts is avoided, thereby resolving system suspension or firmware suspension. In addition, the kernel driver may unmask a masked object in the to-be-masked objects in the different layers after a delay of a specific time period, so that the system suspension or the firmware suspension caused by the interrupts triggered by the large quantity of non-fatal errors can be avoided, and processing by the kernel driver on an interrupt triggered by a subsequent non-fatal error is not affected, thereby ensuring user experience.

The foregoing mainly describes the solutions provided in embodiments of this application from a perspective of interaction between the firmware and the kernel driver. It may be understood that, to implement the foregoing functions, the interrupt processing device includes corresponding hardware structures and/or software modules for performing various functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the interrupt processing device may be divided into functional modules based on the foregoing method examples. For example, each functional module may be obtained through division based on a corresponding function, or two or more functions may be integrated into one processing module. The functional module may be implemented in a form of hardware, or may be implemented in a form of a software functional module. It should be noted that, in embodiments of this application, module division is an example, and is merely a logical function division. During actual implementation, another division manner may be used. The following uses an example in which each functional module is obtained through the division based on the corresponding function for description.

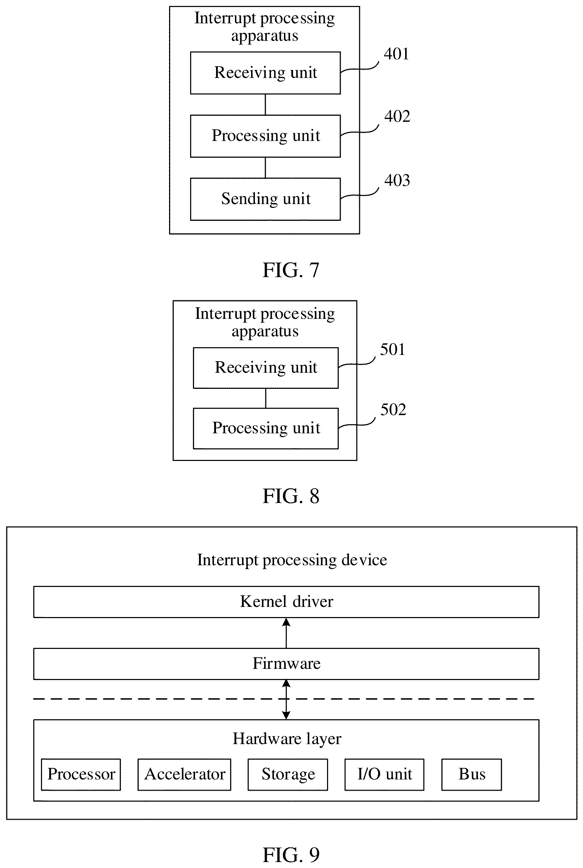

FIG. 7 is a diagram of a structure of an interrupt processing device according to an embodiment of this application. The interrupt processing device may be used in firmware, and the firmware is configured to run on a hardware layer. The apparatus includes a receiving unit 401, a processing unit 402, and a sending unit 403. The receiving unit 401 is configured to support the apparatus in performing S301 in the foregoing method embodiments. The processing unit 402 is configured to support the apparatus in performing S302 and S305b in the foregoing method embodiments, and/or another technical process described in this specification. The sending unit 403 is configured to support the apparatus in performing S303 in the foregoing method embodiments.

It may be understood that all related content of the steps in the foregoing method embodiments may be cited in functional descriptions of corresponding functional modules. Details are not described herein again in this embodiment of this application.

FIG. 8 is a diagram of a structure of another interrupt processing device according to an embodiment of this application. The interrupt processing device may be used in a kernel driver, and the kernel driver is configured to run on a hardware layer. The apparatus includes a receiving unit 501 and a processing unit 502. The receiving unit 501 is configured to support the apparatus in performing S304 in the foregoing method embodiments, and/or another technical process described in this specification. The processing unit 502 is configured to support the apparatus in performing S305a in the foregoing method embodiments.

It may be understood that all related content of the steps in the foregoing method embodiments may be cited in functional descriptions of corresponding functional modules. Details are not described herein again in this embodiment of this application.

FIG. 9 is a diagram of a structure of an interrupt processing device according to an embodiment of this application. The interrupt processing device includes a hardware layer, and firmware and a kernel driver that run on the hardware layer. The hardware layer may include but is not limited to a storage, a processor, an I/O unit, a bus, and the like. In the interrupt processing device, the firmware may be configured to perform the steps of the firmware in the foregoing method embodiments, and the kernel driver may be configured to perform the steps of the kernel driver in the foregoing method embodiments.

It should be noted that all related content of the steps in the foregoing method embodiments may be cited in functional descriptions of corresponding functional modules. Details are not described herein again.

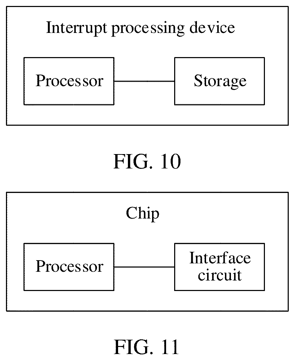

In another embodiment of this application, as shown in FIG. 10, an interrupt processing device is further provided. The interrupt processing device includes a processor and a storage. The storage stores instructions, and the processor runs the instructions in the storage, to cause the interrupt processing device to perform any interrupt processing method provided above. Optionally, the interrupt processing device may further include an I/O unit and a bus. The processor, the storage, and the I/O unit are coupled through the bus.

The processor may be a central processing unit, a general-purpose processor, a baseband processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor may alternatively be a combination implementing a computing function, for example, a combination including one or more microprocessors, or a combination of a digital signal processor and a microprocessor. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In another embodiment of this application, as shown in FIG. 11, a chip is further provided. The chip includes a processor and an interface circuit. The interface circuit is configured to support the processor in performing communication. When the processor runs instructions in a storage, the chip is caused to perform the interrupt processing method provided above.

In the several embodiments provided in this application, it should be understood that the disclosed apparatus and method may be implemented in other manners. For example, the described apparatus embodiments are merely examples. For example, the module or division into the units is merely logical function division and may be another division manner during actual implementation. For example, a plurality of units or components may be combined or integrated into another apparatus, or some features may be ignored or not performed.

The units described as separate components may or may not be physically separate, and components displayed as units may be one or more physical units, may be located in one place, or may be distributed in a plurality of different places. A part or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

If the integrated unit is implemented in the form of the software functional unit and is sold or used as an independent product, the integrated unit may be stored in a readable storage medium. The readable storage medium may include any medium that can store program code, for example, a USB flash drive, a removable hard disk drive, a read-only memory, a random access memory, a magnetic disk, or an optical disc. Based on such an understanding, the technical solutions in embodiments of this application essentially, or the part contributing to a conventional technology, or all or a part of the technical solutions may be embodied in a form of a software product.

In another embodiment of this application, a computer-readable storage medium is further provided. The computer-readable storage medium stores instructions. A device (which may be a single-chip microcomputer, a chip, an electronic device, or the like) or a processor performs the steps of the firmware in the foregoing method embodiments.

In another embodiment of this application, a computer-readable storage medium is further provided. The computer-readable storage medium stores instructions. A device (which may be a single-chip microcomputer, a chip, an electronic device, or the like) or a processor performs the steps of the kernel driver in the foregoing method embodiments.

In another embodiment of this application, a computer program product is further provided. The computer program product includes computer-executable instructions. When at least one processor of a device executes the instructions, the device is caused to perform the steps of the firmware in the foregoing method embodiments.

In another embodiment of this application, a computer program product is further provided. The computer program product includes computer-executable instructions. When at least one processor of a device executes the instructions, the device is caused to perform the steps of the kernel driver in the foregoing method embodiments.

It should be finally noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An interrupt processing method, applied to firmware, wherein the firmware is configured to run on a hardware layer, and the method comprises:
receiving, by the firmware, a plurality of interrupts in a first duration, wherein the plurality of interrupts are triggered when non-fatal errors occur in the hardware layer;
masking, by the firmware, based on interrupt information and layered masking information of the plurality of interrupts, an interrupt that is of a target to-be-masked object corresponding to the plurality of interrupts and that is after the first duration, wherein the layered masking information indicates a plurality of to-be-masked objects, a plurality of to-be-masked objects are obtained by layering transmission of the interrupts, and the plurality of to-be-masked objects comprise the target to-be-masked object; and
sending, by the firmware, the interrupt information of the plurality of interrupts to a kernel driver.

2. The method according to claim 1, wherein the plurality of to-be-masked objects comprise at least one of the following: a hardware module in the hardware layer, an interrupt line for transmission of an interrupt, and an interrupt bit of a status register for storing an interrupt.

3. The method according to claim 1 or 2, wherein the masking, by the firmware, based on the interrupt information and the layered masking information of the plurality of interrupts, the interrupt that is of the target to-be-masked object corresponding to the plurality of interrupts and that is after the first duration comprises:
when the plurality of interrupts belong to the target to-be-masked object, and a quantity of the plurality of interrupts reaches a preset threshold corresponding to the target to-be-masked object, masking, by the firmware, the interrupt that is of the target to-be-masked object and that is after the first duration, wherein interrupt information of each interrupt indicates a to-be-masked object corresponding to the interrupt.

4. The method according to claim 3, wherein the interrupt information comprises at least one of the following: a hardware module identifier, an interrupt line identifier, and an error type of the non-fatal error and corresponding to the interrupt bit.

5. The method according to claim 4, wherein the method further comprises:
when the interrupt information comprises the hardware module identifier, determining, by the firmware based on the hardware module identifier in the interrupt information of each interrupt, a hardware module to which each interrupt belongs;
when the interrupt information comprises the interrupt line identifier, determining, by the firmware based on the interrupt line identifier in the interrupt information of each interrupt, an interrupt line to which each interrupt belongs; and/or
when the interrupt information comprises the error type of the non-fatal error and corresponding to the interrupt bit, determining, by the firmware based on the error type in the interrupt information of each interrupt, an interrupt bit to which each interrupt belongs.

6. The method according to any one of claims 1 to 5, wherein the hardware layer comprises a first hardware system, the firmware comprises first firmware running on the first hardware system, the non-fatal errors comprise an RSA specification error and/or a safety error, and the first firmware is configured to mask a to-be-masked object corresponding to the RSA specification error and/or a to-be-masked object corresponding to the safety error.

7. The method according to any one of claims 1 to 6, wherein the hardware layer further comprises a second hardware system, the firmware further comprises second firmware running on the second hardware system, the non-fatal errors comprise a non-RSA specification error, and the second firmware is configured to mask a to-be-masked object corresponding to the non-RSA specification error.

8. The method according to claim 7, wherein for the non-RSA specification error, the method further comprises:
unmasking, by the second firmware, the masked object in the plurality of to-be-masked objects after a delay of second duration.

9. The method according to claim 8, wherein the unmasking is performed after processing of a last interrupt in the plurality of interrupts is completed; or the unmasking is performed in sequence.

10. An interrupt processing method, applied to a kernel driver, wherein the kernel driver is configured to run on a hardware layer, and the method comprises:
receiving, by the kernel driver, interrupt information of a plurality of interrupts sent by firmware, wherein the plurality of interrupts are received by the firmware in a first duration, and the plurality of interrupts are triggered when non-fatal errors occur in the hardware layer; and
processing, by the kernel driver, the plurality of interrupts based on the interrupt information of the plurality of interrupts, wherein
an interrupt that is of a target to-be-masked object corresponding to the plurality of interrupts and that is after the first duration is masked by the firmware, the firmware performs masking based on the interrupt information and layered masking information of the plurality of interrupts, a plurality of to-be-masked objects are obtained by layering transmission of the interrupts, and the plurality of to-be-masked objects comprise the target to-be-masked object.

11. The method according to claim 10, wherein the plurality of to-be-masked objects comprise at least one of the following: a hardware module in the hardware layer, an interrupt line for transmission of an interrupt, and an interrupt bit of a status register for storing an interrupt.

12. The method according to claim 10 or 11, wherein the interrupt information comprises at least one of the following: a hardware module identifier, an interrupt line identifier, and an error type of the non-fatal error and corresponding to the interrupt bit.

13. The method according to any one of claims 10 to 12, wherein the non-fatal errors comprise an RSA specification error and/or a safety error, and the method further comprises:
unmasking, by the kernel driver, the masked object in the plurality of to-be-masked objects after a delay of second duration.

14. The method according to claim 13, wherein the unmasking is performed after processing of a last interrupt in the plurality of interrupts is completed; or the unmasking is performed in sequence.

15. An interrupt processing device, used in firmware, wherein the firmware is configured to run on a hardware layer, and the apparatus comprises:
a receiving unit, configured to receive a plurality of interrupts in a first duration, wherein the plurality of interrupts are triggered when non-fatal errors occur in the hardware layer;
a processing unit, configured to mask, based on interrupt information and layered masking information of the plurality of interrupts, an interrupt that is of a target to-be-masked object corresponding to the plurality of interrupts and that is after the first duration, wherein the layered masking information indicates a plurality of to-be-masked objects, a plurality of to-be-masked objects are obtained by layering transmission of the interrupts, and the plurality of to-be-masked objects comprise the target to-be-masked object; and
a sending unit, configured to send the interrupt information of the plurality of interrupts to a kernel driver.

16. The apparatus according to claim 15, wherein the plurality of to-be-masked objects comprise at least one of the following: a hardware module in the hardware layer, an interrupt line for transmission of an interrupt, and an interrupt bit of a status register for storing an interrupt.

17. The apparatus according to claim 15 or 16, wherein the processing unit is further configured to:
when the plurality of interrupts belong to the target to-be-masked object, and a quantity of the plurality of interrupts reaches a preset threshold corresponding to the target to-be-masked object, mask the interrupt that is of the target to-be-masked object and that is after the first duration, wherein interrupt information of each interrupt indicates a to-be-masked object corresponding to the interrupt.

18. The apparatus according to claim 17, wherein the interrupt information comprises at least one of the following: a hardware module identifier, an interrupt line identifier, and an error type of the non-fatal error and corresponding to the interrupt bit.

19. The apparatus according to claim 18, wherein the processing unit is further configured to:
when the interrupt information comprises the hardware module identifier, determine, based on the hardware module identifier in the interrupt information of each interrupt, a hardware module to which each interrupt belongs;
when the interrupt information comprises the interrupt line identifier, determine, based on the interrupt line identifier in the interrupt information of each interrupt, an interrupt line to which each interrupt belongs; and/or
when the interrupt information comprises the error type of the non-fatal error and corresponding to the interrupt bit, determine, based on the error type in the interrupt information of each interrupt, an interrupt bit to which each interrupt belongs.

20. The apparatus according to any one of claims 15 to 19, wherein the hardware layer comprises a first hardware system, the firmware comprises first firmware running on the first hardware system, the non-fatal errors comprise an RSA specification error and/or a safety error, and the first firmware is configured to mask a to-be-masked object corresponding to the RSA specification error and/or a to-be-masked object corresponding to the safety error.

21. The apparatus according to any one of claims 15 to 20, wherein the hardware layer further comprises a second hardware system, the firmware further comprises second firmware running on the second hardware system, the non-fatal errors comprise a non-RSA specification error, and the second firmware is configured to mask a to-be-masked object corresponding to the non-RSA specification error.

22. The apparatus according to claim 21, wherein for the non-RSA specification error, the processing unit is further configured to:
unmask the masked object in the plurality of to-be-masked objects after a delay of second duration.

23. The apparatus according to claim 22, wherein the unmasking is performed after processing of a last interrupt in the plurality of interrupts is completed; or the unmasking is performed in sequence.

24. An interrupt processing device, used in a kernel driver, wherein the kernel driver is configured to run on a hardware layer, and the apparatus comprises:
a receiving unit, configured to receive interrupt information of a plurality of interrupts sent by firmware, wherein the plurality of interrupts are received by the firmware in a first duration, and the plurality of interrupts are triggered when non-fatal errors occur in the hardware layer; and
a processing unit, configured to process the plurality of interrupts based on the interrupt information of the plurality of interrupts, wherein
an interrupt that is of a target to-be-masked object corresponding to the plurality of interrupts and that is after the first duration is masked by the firmware, the firmware performs masking based on the interrupt information and layered masking information of the plurality of interrupts, a plurality of to-be-masked objects are obtained by layering transmission of the interrupts, and the plurality of to-be-masked objects comprise the target to-be-masked object.

25. The apparatus according to claim 24, wherein the plurality of to-be-masked objects comprise at least one of the following: a hardware module in the hardware layer, an interrupt line for transmission of an interrupt, and an interrupt bit of a status register for storing an interrupt.

26. The apparatus according to claim 24 or 25, wherein the interrupt information comprises at least one of the following: a hardware module identifier, an interrupt line identifier, and an error type of the non-fatal error and corresponding to the interrupt bit.

27. The apparatus according to any one of claims 24 to 26, wherein the non-fatal errors comprise an RSA specification error and/or a safety error, and the processing unit is further configured to:
unmask the masked object in the plurality of to-be-masked objects after a delay of second duration.

28. The apparatus according to claim 27, wherein the unmasking is performed after processing of a last interrupt in the plurality of interrupts is completed; or the unmasking is performed in sequence.

29. An interrupt processing device, wherein the interrupt processing device comprises a hardware layer, and firmware and a kernel driver that run on the hardware layer, the firmware comprises the interrupt processing device according to any one of claims 15 to 23, and the kernel driver comprises the interrupt processing device according to any one of claims 24 to 28.

30. An interrupt processing device, wherein the interrupt processing device comprises a processor and a storage, the storage stores instructions, and the processor runs the instructions in the storage, to cause the device to perform the interrupt processing method according to any one of claims 1 to 14.

31. A computer-readable storage medium, wherein the computer-readable storage medium stores instructions, and when the instructions are executed by a device, the device is caused to perform the interrupt processing method according to any one of claims 1 to 14.
